# EUROPÄISCHE PATENTANMELDUNG

(11) **EP 2 211 417 A1**
(43) Veröffentlichungstag der Anmeldung: **28.07.2010**
(21) Anmeldenummer: 09179572.4
(22) Anmeldetag: 17.12.2009
(51) Int. Cl.: H01M 10/50, B60H 1/00

(54) **Kühlvorrichtung für eine galvanische Zelle**

(30) Priorität: 26.01.2009 DE 102009006080
(71) Anmelder: Behr GmbH & Co. KG, 70469 Stuttgart (DE)
(72) Erfinder: Wiebelt, Achim, 71711, Steinheim (DE); Schmid, Caroline, 70186, Stuttgart (DE); Hirsch, Stefan, 70180, Stuttgart (DE)

(57) **Zusammenfassung**

Die vorliegende Erfindung betrifft eine Kühlvorrichtung für eine galvanische Zelle (100), die zwei gegenüberliegenden Kontaktflächen (102), an denen elektrische Kontakte angeordnet sein können und eine zwischen den Kontaktflächen angeordnete Seitenfläche aufweist. Die Kühlvorrichtung weist ein Kühlelement (104) zum Bereitstellen einer Wärmesenke (108) auf, wobei das Kühlelement (104) ausgebildet ist, um die Wärmesenke (108) auf einem Innenbereich der Seitenfläche bereitzustellen, wenn die Kühlvorrichtung mit der Seitenfläche gekoppelt ist.

## Beschreibung

Die vorliegende Erfindung bezieht sich auf eine Kühlvorrichtung für eine galvanische Zelle und einen Energiespeicher die beispielsweise in Hybrid-Elektrofahrzeugen oder Elektrofahrzeugen eingesetzt werden können.

In modernen Hybrid-Elektrofahrzeugen oder Elektrofahrzeugen werden leistungsfähige Energiespeicher, wie zum Beispiel Li-Ionen oder NiMH-Akkumulatoren oder Super-Caps eingesetzt. Bei diesen kommt es beim schnellen Laden und Entladen aufgrund von Widerständen in und außerhalb der Zellen zur Erwärmung. Temperaturen über 50°C schädigen die Energiespeicher dauerhaft. Um die Funktion der Energiespeicher zu gewährleisten müssen diese aktiv gekühlt werden. Dazu werden die Energiespeicher über Kühlbleche mit einer Kühlplatte in thermischen Kontakt gebracht.

Für einen optimalen Betrieb der Batterie ist es wichtig, dass alle Zellen gleichmäßig gekühlt werden, d.h. alle Zellen sollten auf demselben Temperaturniveau liegen. Das Temperaturniveau der Zellen beeinflusst die Lebensdauer und die Leistung. Ebenso ist es wichtig, dass durch die Kühlung hervorgerufene Temperaturgradienten innerhalb der Zellen möglichst gering gehalten werden.

Bei bekannten Kühlvorrichtungen werden die Kühlbleche flächig, ein-oder beidseitig, auf die Zellenaußenflächen angebracht. Die Kühlbleche werden dann mit der Kühlplatte in Kontakt gebracht. Die Kontaktfläche zur Kühlplatte ist dabei meistens gleich der Fläche des Kühlbleches aus Dicke und Länge. Diese Übergangsfläche ist bei allen Konstruktionen der thermische Flaschenhals.

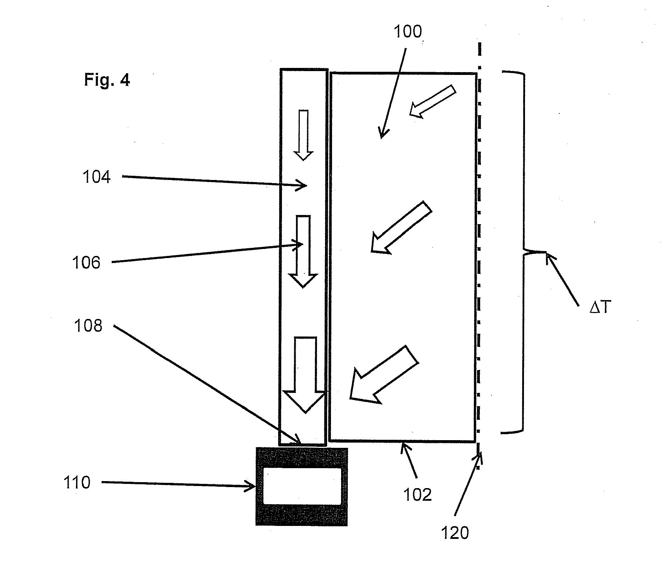

Fig. 4 zeigt eine Zelle 100 mit einem Zellfuß 102. Ein Kühlblech 104 ist seitlich an der Zelle 100 angeordnet. Ein durch Pfeile gekennzeichneter Wärmestrom 106 verläuft aus einem Inneren der Zelle 100 über das Kühlblech 104 zu einer Wärmesenke 108, die sich am Fuß des Kühlblechs 104 befindet. Die Wärmesenke 108 ist mit einer Kühlplatte 110 gekoppelt, über die der in die Wärmesenke 108 fließende Wärmestrom abgeleitet werden kann. Bei der gezeigten flächigen, seitlichen thermischen Anbindung von Kühlblechen 104 an die Zellaußenfläche fließt der Wärmestrom 106 über die gesamte Zellhöhe bis zur Wärmesenke 108 am Fuß des Kühlbleches, der dem Zellfuß 102 entspricht. Dementsprechend hoch ist ein Temperaturgradient ΔT über der Zellhöhe. Eine mögliche Symmetrieebene 120 der Zelle ist durch eine gestrichelte Linie eingezeichnet.

Durch das einseitige Verbinden des Kühlbleches 104 mit der Kühlplatte 110 entsteht vor allem über der Höhe der Zelle 100 der Temperaturgradient ΔT. Der Temperaturgradient ΔT wird durch die Zellabwärme und die Dicke des Kühlbleches 104, bzw. der Übergangsfläche 108 zwischen Kühlblech 104 und Kühlplatte 110 bestimmt. Ein dickes Kühlblech 104 verringert den Temperaturgradienten ΔT.

Um den Temperaturgradienten über die Zellhöhe zu vermeiden, werden fluidführende Kühlbleche zwischen die Zellen angebracht. Dadurch kann der Temperaturgradient in den Zellen fast vermieden werden.

Vor allem bei hohen Zellen in Verbindung mit größeren Abwärmen müssen die Kühlbleche sehr dick gewählt werden, um den zulässigen Temperaturgradienten in der Zelle noch einhalten zu können. Dicke Kühlbleche haben eine geringe gravimetrische und volumetrische Energiedichte des Kühlapparates zur Folge.

Die fluiddurchströmten Kühlbleche haben auch ihre Nachteile in der gravimetrische und volumetrische Energiedichte, da die Blechdicken und die Kühlmittelkanäle bedingt durch die Fertigungsmöglichkeiten und den zulässigen Druckverlust in der Gesamtkonstruktion nicht beliebig klein gewählt werden können. Außerdem kommt hier noch das Problem der Dichtheit in den Anschlüssen und der Gleichverteilung des Kühlfluides hinzu. Da jedes Blech mit Kühlfluid bedient werden muss, gibt es bei jedem Blech zumindest einen Anschluss welcher abgedichtet werden muss. Insbesondere ist eine Lösung mit fluiddurchströmten Kühlbleche sehr kostenintensiv.

Die DE 101 45 064 A1 beschreibt eine eingehauste elektrochemische Zelle, deren Kontakte an zwei gegenüberliegenden Stirnseiten angeordnet sind. An den Stirnseiten ist jeweils eine Halterung vorgesehen, die als Kühlmedium führende Einrichtung ausgebildet ist. Es handelt sich also um eine zylindrische Zelle mit einer mittigen Halterung, die auch als Kühlung wirkt. Aufgrund der Anordnung der Halterung lässt sich ein großer Temperaturgradient innerhalb der Zelle nicht vermeiden.

Es ist die Aufgabe der vorliegenden Erfindung eine verbesserte Kühlvorrichtung für eine galvanische Zelle sowie einen verbesserten Energiespeicher zu schaffen.

Diese Aufgabe wird durch eine Kühlvorrichtung gemäß Anspruch 1 sowie einen Energiespeicher gemäß Anspruch 14 gelöst.

Der vorliegenden Erfindung liegt die Erkenntnis zugrunde, dass sich der Temperaturgradient innerhalb einer galvanischen Zelle reduzieren lässt, indem eine Wärmesenke einer Kühlvorrichtung nicht am Zellfuß sondern beispielsweise auf halber Zellhöhe angeordnet wird. Beispielsweise kann die Wärmesenke bei Flachzellen mittig an der flächigen Seite angebracht werden, um den Temperaturgradienten zu minimieren.

Auf diese Weise ist es möglich, die in der Batterie verbauten Zellen gleichmäßig zu kühlen, und dabei den Temperaturgradienten in den Zellen möglichst gering zu halten.

Die vorliegende Erfindung schafft eine Kühlvorrichtung für eine galvanische Zelle, die zwei gegenüberliegenden Kontaktflächen, an denen elektrische Kontakte angeordnet sein können und eine zwischen den Kontaktflächen angeordnete Seitenfläche aufweist, mit folgenden Merkmalen: einem Kühlelement zum Bereitstellen einer Wärmesenke, wobei das Kühlelement ausgebildet ist, um die Wärmesenke auf einem Innenbereich der Seitenfläche bereitzustellen, wenn die Kühlvorrichtung mit der Seitenfläche gekoppelt ist.

Bei der galvanischen Zelle kann es sich um eine elektrochemische Zelle, wie zum Beispiel einen Li-lonen- oder NiMH-Akkumulator oder Super-Caps handeln. Die Zelle kann eine Mehrzahl von Außenflächen aufweisen, von denen die Seitenfläche die größte Fläche aufweisen kann. Der Innenbereich der Seitenfläche kann ein Flächenabschnitt der Seitenfläche sein, der vollständig innerhalb der Seitenfläche angeordnet ist oder sich zumindest von einem Rand der Seitenfläche ins Innere der Seitenfläche hinein erstreckt. Der Innenbereich kann dabei jede geeignete Form aufweisen und mittig oder außermittig in der Seitenfläche angeordnet sein. Die Wärmesenke kann einen Bereich definieren von dem die abzuleitende Wärme von der Zelle abgeführt wird. Typischerweise sind die auftretenden Wärmeströme auf die Wärmesenke ausgerichtet. Das heißt, dass die Wärmeströme auf der Zellseite in Richtung der Wärmesenke führen und auf der zellabgewandten Seite von der Wärmesenke weg führen. Die Kühlvorrichtung kann mit der Seitenfläche gekoppelt werden, in dem sie in direkten Kontakt mit der Seitenfläche gebracht wird. Alternativ kann zwischen der Kühlvorrichtung und der Seitenfläche ein zusätzliches wärmeleitfähiges Material angeordnet sein.

Bei der Zelle kann jede der Kontaktflächen eine geringere Fläche als die Seitenfläche aufweisen. In dem die Wärmesenke auf einem Innenbereich der größten Fläche angeordnet wird, lässt sich der Temperaturgradient in der Zelle möglichst weit reduzieren.

Die Seitenfläche kann mit einem ersten Ende an eine erste der Kontaktflächen und mit einem zweiten Ende an eine zweite der Kontaktflächen angrenzen und der Innenbereich kann zu dem ersten Ende und dem zweiten Ende einen vorbestimmten Abstand aufweisen. Weist die Seitenfläche zwischen den Kontaktflächen eine längliche Ausdehnung aus, so kann der Innenbereich beispielsweise streifenförmig zwischen dem ersten und dem zweiten Ende der Seitenfläche verlaufen.

Dabei kann der vorbestimmte Abstand mindestens einem Viertel eines Abstands zwischen dem ersten Ende und dem zweiten Ende entsprechen. Somit kann zum einen eine gute Wärmeableitung gewährleistet werden und zum anderen der Platzbedarf des Kühlelements gering gehalten werden.

Gemäß einer Ausgestaltung ist der Innenbereich mittig in der Seitenfläche angeordnet. Auf diese Weise ist eine besonders gleichmäßige Wärmeableitung möglich.

Die Seitenfläche kann einen Außenbereich aufweisen, der an den Innenbereich angrenzt und das Kühlelement kann von dem Außenbereich isoliert sein, wenn die Kühlvorrichtung mit der Seitenfläche gekoppelt ist. Somit steht das Kühlelement nur im Innenbereich mit der Zelle in Verbindung. Die Isolierung zum Außenbereich kann beispielswiese durch einen Luftspalt ausgeführt sein. Alternativ kann als Füllmaterial ein wärmeisolierendes Material verwendet werden, so dass eine Verspannung nebeneinanderliegender Zellen ermöglicht bzw. stabiler wird.

Gemäß einer Ausgestaltung kann die Kühlvorrichtung eine Kühlplatte aufweisen, die an einem der Zelle abgewandtem Ende des Kühlelements mit dem Kühlelement verbunden ist. Durch die Kühlplatte kann eine Ableitung der von dem Kühlelement aufgenommenen Wärme gewährleistet werden.

Ferner kann die Kühlvorrichtung eine Kontaktschicht aufweisen, die mit dem Kühlelement verbunden ist und ausgebildet ist, um zumindest den Innenbereich der Seitenfläche zu kontaktieren, wenn die Kühlvorrichtung mit der Seitenfläche gekoppelt ist. Durch die Kontaktschicht kann die Wärmekopplung zwischen der Zelle und der Kühlvorrichtung verbessert werden.

Dabei kann die Kontaktschicht ausgebildet sein, um die gesamte Seitenfläche zu kontaktieren. Dadurch können die Temperaturgradienten nochmals gesenkt werden.

Vorteilhafterweise kann das Kühlelement aus einem wärmeleitfähigen Material bestehen. Dabei kann das Kühlelement beispielsweise als Kühlblech ausgeformt sein.

Das Kühlelement kann ein Strangpressprofil aufweisen. Indem das Kühlelement mittels Stangenpressen hergestellt werden kann, können auch komplizierte Formen bereitgestellt werden.

Gemäß einer weiteren Ausgestaltung kann das Kühlelement ausgebildet sein, um eine weitere Wärmesenke auf einem weiteren Innenbereich einer weiteren Seitenfläche einer weiteren galvanischen Zelle bereitzustellen, wenn die Kühlvorrichtung mit der weiteren Seitenfläche gekoppelt ist. Auf diese Weise kann die erfindungsgemäße Kühlvorrichtung zur Kühlung zweier nebeneinander angeordneter Zellen eingesetzt werden.

Die vorliegende Erfindung schafft ferner einen Energiespeicher, mit folgenden Merkmalen: einer galvanischen Zelle mit zwei gegenüberliegenden Kontaktflächen an denen elektrische Kontakte angeordnet sein können und einer zwischen den Kontaktflächen angeordneten ersten Seitenfläche; und einer erfindungsgemäßen Kühlvorrichtung, die mit der ersten Seitenfläche gekoppelt ist.

Somit kann die erfindungsgemäße Kühlvorrichtung direkt mit einer galvanischen Zelle kombiniert werden.

Dabei kann der Energiespeicher eine weitere erfindungsgemäße Kühlvorrichtung aufweisen, die mit einer weiteren Seitenfläche der galvanischen Zelle gekoppelt ist. Somit ist beispielsweise eine beidseitige Kühlung der Zelle möglich. Dadurch können die Temperaturgradienten weiter gesenkt werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung einer Zelle mit einer Kühlvorrichtung gemäß einem Ausführungsbeispiel der vorliegenden Erfindung;
- Fig. 2: eine Seitenansicht einer Zelle mit einer Kühlvorrichtung gemäß einem Ausführungsbeispiel der vorliegenden Erfindung;
- Fig. 3: eine Darstellung einer Zelle mit einer Kühlvorrichtung gemäß einem weiteren Ausführungsbeispiel der vorliegenden Erfindung; und
- Fig.4: eine Darstellung einer Zelle mit einer Kühlvorrichtung gemäß dem Stand der Technik.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

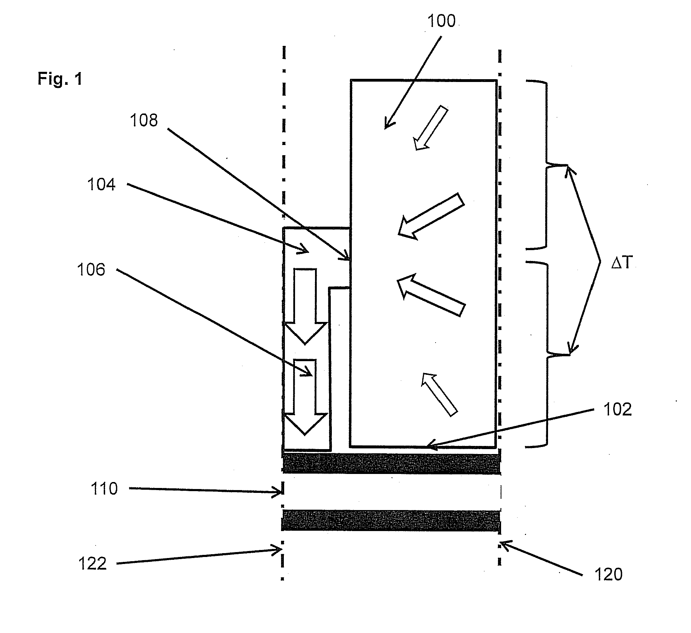

Fig. 1 zeigt eine Kühlvorrichtung für eine galvanische Zelle, gemäß einem Ausführungsbeispiel der vorliegenden Erfindung. Gezeigt ist eine Zelle 100, die einen rechteckigen Querschnitt aufweist. Am oberen und unteren Ende weist die Zelle 100 Kontaktflächen auf, an denen die Zelle 100 elektrisch kontaktiert werden kann. Die untere Kontaktfläche stellt einen Zeilfuß 102 dar. Auf der rechten und linken Seite der Zelle 100 sind Seitenflächen dargestellt. Gemäß diesem Ausführungsbeispiel ist die Zelle 100 höher als breit. Die Zelle kann quaderförmig sein. Alternativ kann die Zelle zylinderförmig sein. Bei einer Rundzelle kann die Seitenfläche durch die Mantelfläche gebildet werden.

Die Kühlvorrichtung ist gemäß diesem Ausführungsbeispiel an der linken Seitenfläche der Zelle 100 angeordnet. Die Kühlvorrichtung weist ein Kühlelement 104 auf, über das ein Wärmestrom 106 aus der Zelle abgeleitet werden kann und zu einem weiteren Kühlelement 110 geführt werden kann. Der Übersichtlichkeit halber ist nur einer der den Wärmestrom darstellenden Pfeile mit dem Bezugszeichen 106 versehen. Bei dem Kühlelement 104 kann es sich um ein Kühlblech und bei dem weiteren Kühlelement 110 um eine Kühlplatte handeln.

Das Kühlelement 104 kontaktiert die Seitenfläche der Zelle 100 in einem Innenbereich. Das bedeutet, dass die Seitenfläche mindestens einen an den Innenbereich angrenzenden oder den Innenbereich umschließenden Flächenbereich aufweist, der durch das Kühlelement 104 nicht kontaktiert wird. Somit erfolgt eine thermische Anbindung der Kühlvorrichtung an die Zelle 100 über den Innenbereich der Seitenfläche. Der Innenbereich fungiert somit als Wärmesenke 108. Die Wärmesenke 108 ist gemäß diesem Ausführungsbeispiel auf halber Zellhöhe angeordnet.

Bei der erfindungsmäßigen Kühlvorrichtung kontaktiert das Kühlblech 104 die Zelle 100 lediglich auf halber Zellhöhe. Die Wärmesenke 108 ist somit auf halber Zellhöhe. Dadurch wird der maximale Weg, den der Wärmestrom 106 bis zur Wärmesenke 108 zurücklegen muss halbiert. Dementsprechend reduzieren sich auch die durch geschweifte Klammern angedeutete Temperaturgradienten ΔT innerhalb der Zelle 100.

Gemäß einem weiteren Ausführungsbeispiel kontaktiert die Kühlvorrichtung oder eine weitere Kühlvorrichtung die Zelle 100 an einer weiteren Außenfläche. Beispielsweise kann eine weitere Kühlvorrichtung an einer der linken Seitenfläche gegenüber liegenden Seitenfläche der Zelle 100 angeordnet sein. Der Aufbau und die Anordnung der weiteren Kühlvorrichtung können symmetrisch zu der gezeigten Kühlvorrichtung erfolgen. Dies ist in Fig. 1 durch eine mögliche Symmetrieebene 120 der Zelle 100 dargestellt.

Gemäß dem in Fig. 1 gezeigten Ausführungsbeispiel weist das Kühlelement 104 einen L-förmigen Aufbau aus. Dabei können das kürzere Ende des Kühlelements 104 mit der Zelle 100 und das längere Ende mit der Kühlplatte 100 verbunden sein. Alternativ kann das Kühlelement 104 einen T-förmigen Aufbau aufweisen. Durch den T-förmigen Aufbau kann das Kühlelement 104 eine weitere Wärmesenke für eine weitere Zelle bereitstellen. Die weitere Zelle kann der Zelle 100 gegenüberliegend angeordnet sein, so dass das Kühlelement 104 zwischen der Zelle 100 und der weiteren Zelle angeordnet ist. Eine solche Anordnung ist durch die weitere Symmetrieebene 122 angedeutet. Um weitere Zellen oder andersartig angeordnete Zellen zu kontaktieren kann das Kühlelement auch weitere geeignete Formen aufweisen.

Eine höhenmäßige Ausdehnung des die Wärmesenke 108 bildenden Innenbereichs kann beispielsweise 10%, 15%, 20%, 25%, 30%, 35%, 40% der Höhe bzw. der Länge der Seitenfläche betragen. Je nach Ausführungsform sind auch größere, kleinere oder dazwischenliegende Werte möglich. Der Innenbereich kann mittig oder außermittig in der Seitenfläche angeordnet sein. Beispielsweise kann ein Abstand des Innenbereichs zu einem Rand der Seitenfläche 15%, 20%, 25%, 30%, 35%, 40% der Höhe bzw. der Länge der Seitenfläche betragen. Je nach Ausführungsform sind auch größere, kleinere oder dazwischenliegende Werte möglich. Der Innenbereich kann dabei zu den einzelnen Rändern der Seitenfläche gleiche oder unterschiedliche Abstände aufweisen. Der Innenbereich kann beispielsweise rechteckig oder rund sein.

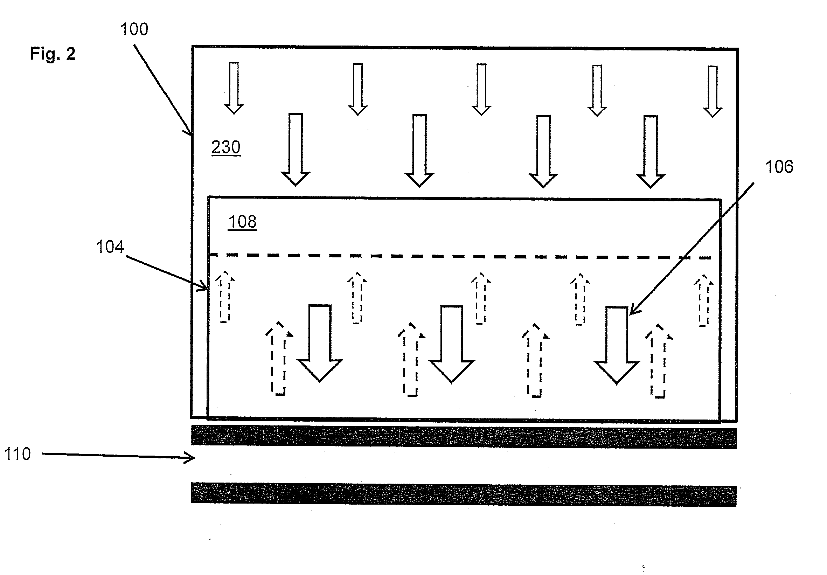

Fig. 2 zeigt eine Seitenansicht einer Zelle mit einer Kühlvorrichtung gemäß einem Ausführungsbeispiel der vorliegenden Erfindung. Insbesondere ist die Seitenfläche 230 der Zelle 100 sowie das Kühlelement 104 dargestellt, das mit der Seitenfläche 230 thermisch gekoppelt ist. Dazu kontaktiert das Kühlelement 104 die Seitenfläche 230 auf dem Innenbereich der Seitenfläche 230. Der Innenbereich entspricht der Wärmesenke 108, deren Begrenzung nach unten durch die gestrichelte Linie angedeutet ist. Gemäß diesem Ausführungsbeispiel weist die Wärmesenke 108 einen streifenförmigen Verlauf auf. Zu den seitlichen Rändern (rechts und links in Fig. 2) der Seitenfläche 230 kann die Wärmesenke 108 einen Abstand aufweisen. Alternativ kann sich die Wärmesenke 108 bis zu den Rändern der Seitenfläche ausdehnen.

Gemäß einem weiteren Ausführungsbeispiel kann sich die Wärmesenke 108 bis zu dem von der Kühlplatte 110 abgewandte Rand (der obere Rand in Fig. 2) der Seitenfläche 230 erstrecken. In diesem Fall kann das Kühlelement lediglich auf dem der Kühlplatte 110 zugewandten Abschnitt der Seitenfläche 230 von dieser thermisch isoliert sein.

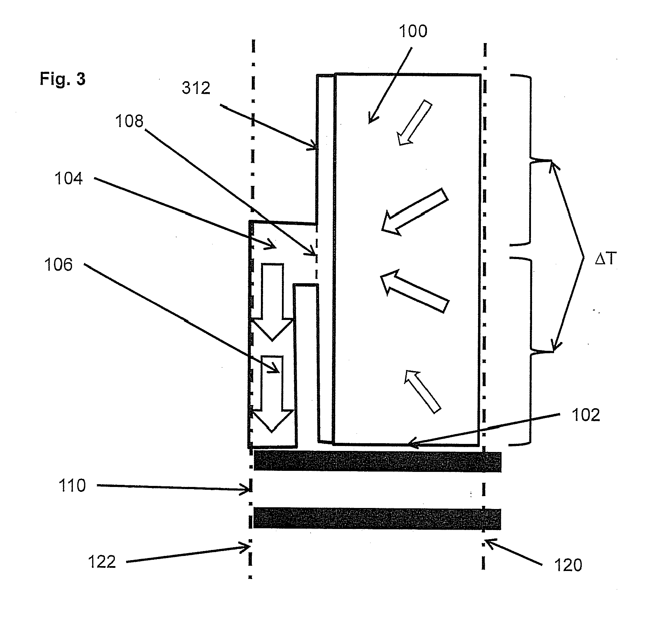

Fig. 3 zeigt eine Kühlvorrichtung für eine galvanische Zelle, gemäß einem weiteren Ausführungsbeispiel der vorliegenden Erfindung. Die Anordnung unterscheidet sich von der in Fig. 1 gezeigten Anordnung darin, dass zwischen dem Kühlelement 104 und der Seitenfläche der Zelle 100 eine Kontaktschicht 312 angeordnet ist. Gemäß diesem Ausführungsbeispiel erstreckt sich die Kontaktschicht 312 über die gesamte Seitenfläche. Alternativ kann die Kontaktschicht 312 nur einen Teilbereich der Seitenfläche bedecken. Das Kühlelement 104 ist mit der Kontaktschicht 312 innerhalb des Innenbereichs verbunden, der wiederum die Wärmesenke 108 ausbildet. Der Innenbereich kann gemäß diesem Ausführungsbeispiel ein Flächenabschnitt sein, der von der Oberfläche der Seitenfläche auf die Oberfläche der Kontaktschicht 312 abgebildet wird.

Somit kann das Kühlblech des Kühlelements 104 über die Kontaktschicht 312 die gesamte Außenfläche die Zelle 100 kontaktieren. Die Wärmesenke 108 ist aber dennoch auf halber Zellhöhe angeordnet. Dadurch können die Temperaturgradienten ΔT nochmals etwas gesenkt werden.

Der erfindungsgemäße Ansatz schafft somit eine Stempelkühlung für einen Energiespeicher. Eine Zellkühlung kann dabei mit Kühlblechen erfolgen, wobei die Wärmesenke nicht am Fuß des Kühlbleches, der dem Zeilfuß entspricht, angebracht wird, sondern auf halber Zellhöhe angebracht wird. Dadurch werden die Temperaturgradienten innerhalb der Zelle reduziert, da der maximale Weg der Wärmeströme hin zur Wärmesenke verringert wird.

Die beschriebenen Ausführungsbeispiele sind nur beispielhaft gewählt und können miteinander kombiniert werden.

## Patentansprüche

1. Kühlvorrichtung für eine galvanische Zelle (100), die zwei gegenüberliegenden Kontaktflächen (102), an denen elektrische Kontakte angeordnet sein können und eine zwischen den Kontaktflächen angeordnete Seitenfläche (230) aufweist, mit folgenden Merkmalen:
einem Kühlelement (104) zum Bereitstellen einer Wärmesenke (108), wobei das Kühlelement ausgebildet ist, um die Wärmesenke auf einem Innenbereich der Seitenfläche bereitzustellen, wenn die Kühlvorrichtung mit der Seitenfläche gekoppelt ist.

2. Kühlvorrichtung gemäß Anspruch 1, bei der jede der Kontaktflächen (102) eine geringere Fläche als die Seitenfläche (230) aufweist.

3. Kühlvorrichtung gemäß einem der vorangegangenen Ansprüche, bei der die Seitenfläche (230) mit einem ersten Ende an eine erste der Kontaktflächen und mit einem zweiten Ende an eine zweite der Kontaktflächen (102) angrenzt und der Innenbereich zu dem ersten Ende und/oder dem zweiten Ende einen vorbestimmten Abstand aufweist.

4. Kühlvorrichtung gemäß Anspruch 3, bei der der vorbestimmte Abstand mindestens einem Viertel eines Abstands zwischen dem ersten Ende und dem zweiten Ende entspricht.

5. Kühlvorrichtung gemäß einem der vorangegangenen Ansprüche, bei der der Innenbereich mittig in der Seitenfläche (230) angeordnet ist.

6. Kühlvorrichtung gemäß einem der vorangegangenen Ansprüche, bei der die Seitenfläche (230) einen Außenbereich aufweist, der an den Innenbereich angrenzt und bei der das Kühlelement (104) von dem Außenbereich isoliert ist, wenn die Kühlvorrichtung mit der Seitenfläche gekoppelt ist.

7. Kühlvorrichtung gemäß einem der vorangegangenen Ansprüche, mit einer Kühlplatte (110), die an einem der Zelle (100) abgewandten Ende des Kühlelements (104) mit dem Kühlelement verbunden ist.

8. Kühlvorrichtung gemäß einem der vorangegangenen Ansprüche, mit einer Kontaktschicht (312), die mit dem Kühlelement (104) verbunden ist und ausgebildet ist, um zumindest den Innenbereich der Seitenfläche (230) zu kontaktieren, wenn die Kühlvorrichtung mit der Seitenfläche gekoppelt ist.

9. Kühlvorrichtung gemäß Anspruch 8, bei der die Kontaktschicht (312) ausgebildet ist, um die gesamte Seitenfläche (230) zu kontaktieren.

10. Kühlvorrichtung gemäß einem der vorangegangenen Ansprüche, bei der das Kühlelement (104) aus einem wärmeleitfähigen Material besteht.

11. Kühlvorrichtung gemäß einem der vorangegangenen Ansprüche, bei der das Kühlelement (104) als Kühlblech ausgeformt ist.

12. Kühlvorrichtung gemäß einem der vorangegangenen Ansprüche, bei der das Kühlelement (104) ein Strangpressprofil aufweist.

13. Kühlvorrichtung gemäß einem der vorangegangenen Ansprüche, bei dem das Kühlelement (104) ausgebildet ist, um eine weitere Wärmesenke auf einem weiteren Innenbereich einer weiteren Seitenfläche einer weiteren galvanischen Zelle bereitzustellen, wenn die Kühlvorrichtung mit der weiteren Seitenfläche gekoppelt ist.

14. Energiespeicher, mit folgenden Merkmalen;
einer galvanischen Zelle (100) mit zwei gegenüberliegenden Kontaktflächen an denen elektrische Kontakte angeordnet sein können und einer zwischen den Kontaktflächen angeordneten ersten Seitenfläche (230); und
einer Kühlvorrichtung (104), gemäß einem der vorangegangenen Ansprüche, die mit der ersten Seitenfläche gekoppelt ist.

15. Energiespeicher gemäß Anspruch 14, der eine weitere Kühlvorrichtung, gemäß einem der Ansprüche 1 bis 13 aufweist, die mit einer weiteren Seitenfläche der galvanischen Zelle (100) gekoppelt ist.
